(19) Europäisches Patentamt
European Patent Office
Office européen des brevets

(11) **EP 4 056 049 B1**

(12) **EUROPEAN PATENT SPECIFICATION**

(45) Date of publication and mention
of the grant of the patent:
**27.08.2025 Bulletin 2025/35**

(21) Application number: **20885905.8**

(22) Date of filing: **06.11.2020**

(51) International Patent Classification (IPC):
*A23L 7/196* (2016.01)    *A23L 5/10* (2016.01)

(52) Cooperative Patent Classification (CPC):
**A23B 2/80; A23L 5/15; A23L 7/196**

(86) International application number:
**PCT/KR2020/015504**

(87) International publication number:
**WO 2021/091301 (14.05.2021 Gazette 2021/19)**

(54) **MICROWAVABLE PACKAGED FROZEN RICE HAVING SCORCHED TEXTURE**

MIKROWELLENTAUGLICH VERPACKTER GEFRORENER REIS MIT VERSCHMORTER TEXTUR

RIZ CONGELÉ CONDITIONNÉ POUR CUISSON AU MICRO-ONDES PRÉSENTANT UNE TEXTURE GRILLÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2019 KR 20190142985**

(43) Date of publication of application:
**14.09.2022 Bulletin 2022/37**

(73) Proprietor: **CJ Cheiljedang Corporation**
**Seoul 04560 (KR)**

(72) Inventors:
• **JEONG, Da Woon**
**Suwon-si, Gyeonggi-do 16495 (KR)**
• **SAGONG, Hun Gu**
**Suwon-si, Gyeonggi-do 16495 (KR)**
• **LEE, Byung Kook**
**Suwon-si, Gyeonggi-do 16495 (KR)**

(74) Representative: **Ipsilon Lyon**
**Le Contemporain**
**50 Chemin de la Bruyère**
**69574 Dardilly Cedex (FR)**

(56) References cited:
**WO-A1-2017/092913     JP-A- 2006 014 731**
**JP-A- 2015 085 999     JP-A- 2016 154 541**
**US-A1- 2015 237 892**

• **ANONYMOUS: "Delicious Packaging War②]"CJ's Goal is to Make Food that Looks Like It's Now Cooked no Matter When You Open It.", 5 April 2018 (2018-04-05), XP055829911, Retrieved from the Internet <URL:http://www. asiae.co.kr/article/2018040314231145426& mobile=Y>**

## Description

### Technical Field

The present application relates to microwavable packaged frozen rice having a scorched texture.

### Background Art

As convenience foods that can be prepared and eaten simply and conveniently at home become popular, rice eaten as staple food in Koreans has been also released and distributed in the market in a packaged frozen state. The types of packaged frozen rice sold as described above include frozen namul bap, frozen bibimbap, frozen fried rice, and the like, and in order to cook the foods distributed in a frozen state, a cooking method using a pan or a cooking method using a microwave oven is used. Document WO2017/092913 discloses a packaged food product for microwave cooking with the container divided into sections for achieving the optimal cooking conditions at the same heating time for foods.

Due to the increase in single-person households and changes in consumers' lifestyles, there is an increasing need of consumers to find convenience foods that show a certain level of taste and quality while reducing the inconvenience of the cooking process, and even in the case of packaged frozen rice, there is a need to ensure the convenience of the cooking process and the maintenance of quality during cooking. Even in the packaged frozen rice, particularly, fried rice needs to produce a scorched texture with a slight burnt taste scorched when cooked using a pan, or a properly cooked texture of rice grains so as to give a unique flavor. However, the process of frying rice using a pan is greatly affected by the cook's cooking ability, heating temperature, cooking time, etc., and thus, there is a problem in that the taste and quality of the finished rice may vary. In addition, when cooking the packaged frozen rice using a microwave oven, there is a problem in that the rice becomes soggy after cooking.

Meanwhile, in the case of pizza or dumplings among convenience foods cooked in a microwave oven, a form of including a susceptor or a heating pad as part of a packaging material is released on the market, but no attempt has been made to obtain the scorched texture by applying the susceptor to the packaged frozen rice, which is made of a rice raw material other than flour. In addition, there has been an attempt to prepare scorched rice using microwaves (Korean Patent Application No. 10-2009-0096453), but it is only a method of preparing the scorched rice by cooking immersed rice in a microwave oven. Accordingly, the inventor of the present application completed the invention of the present application capable of effectively obtaining a scorched texture that has been produced only by cooking using a pan while easily cooking packaged frozen rice, a staple food of Koreans, in a microwave oven at home.

### Disclosure

### Technical Problem

An object of the present application is to provide microwavable packaged frozen rice capable of producing a scorched texture while may be easily cooked. Another object of the present application is to provide a method for manufacturing rice having a scorched texture that has been produced only by pan cooking through heating using a microwave oven.

### Technical Solution

The invention is directed to a microwavable packaged frozen rice including a susceptor and frozen rice, as defined by the appended claims.

The invention is also directed to a manufacturing method for microwavable packaged frozen rice including preparing frozen rice; and contacting the frozen rice and a susceptor. The method is as defined by the appended claim.

### Advantageous Effects

According to the present application, the packaged frozen rice is cooked using a microwave oven and has an advantage of being easily cooked even at home, and has a less influence of a cook's cooking skill or a cooking environment unlike a cooking method using a pan to maintain a certain level or higher of quality of the finished food.

In addition, it is possible to achieve high average and maximum temperatures enough not to be achieved in a general microwave cooking process, and to cook rice having a scorched texture in a short time that could not be produced in conventional cooking using a microwave oven.

However, the effects of the present invention are not limited to the above-mentioned effects, and other effects not mentioned will be clearly understood by those skilled in the art from the following description.

## Description of Drawings

FIG. 1 is a graph of measuring a change in temperature of a susceptor by putting chicken ribs fried rice in a container including the susceptor and heating the rice in a microwave oven of 700 W, wherein a horizontal axis of the graph means a time and a vertical axis means a temperature (°C).

FIG. 2 is a photograph of capturing frozen packaged rice of the present application contained in a container with a susceptor and frozen packaged rice of a control group contained in a container without a susceptor, which are heated in a microwave oven, respectively.

## Best Mode

Hereinafter, the present application will be described in detail.

The present application provides microwavable packaged frozen rice including a susceptor and frozen rice.

The microwavable packaged frozen rice of the present application refers to packaged rice that may be heated and cooked in a microwave oven, and the microwave oven may be a microwave oven of 700 W or 1,000 W, but any microwave oven used for packaged cooking may be used without limitation. The packaged frozen rice may be cooked in a microwave oven in a packaged form as it is, and according to the embodiment of the present application, if both the susceptor and the frozen rice are included, the packaged frozen rice is transferred to another container and cooked in the microwave oven.

In the present application, the term "scorched texture" refers to a texture that appears yellowish and slightly burnt when the rice is heated at a high temperature and has a feature of producing properly cooked and savory flavor of rice grains. The scorched texture has a texture similar to scorched rice, but has a weaker scorched degree therethan, and may be produced in cooking of rice using a pan, for example, in the cooking process of fried rice. The microwavable packaged frozen rice of the present application has an improved scorched texture when heated using a microwave oven. For example, as described below, when heated at 700 W for 6 minutes, compared to heating packaged frozen rice without a susceptor under the same condition, when a color difference $\Delta E$ according to the CIE Lab is 3 or more, it may be considered that the scorched texture of the rice is produced.

In the present application, even when used in a microwave oven of 700 W as well as 1,000 W, it is possible to produce a scorched texture of rice. In addition, in the use of a microwave oven of 700 W, it is possible to produce a sufficiently scorched texture just by heating for 6 minutes, and by controlling the thickness, moisture, oil content, and a ratio of moisture/oil, it is characterized in that it is possible to produce a sufficiently scorched texture even in a little less time of 4 minutes.

The susceptor serves to convert microwaves of the microwave oven into heat, and transfers the converted heat energy to the frozen rice to be used for heating and cooking the frozen rice. The susceptor is thinly coated with a metal such as aluminum, copper, zinc, tin, gold, silver, iron, nickel, etc., but any susceptor material known to be used as a packaging material for food in the art may be used as a material without limitation. In the packaged frozen rice of the present application, the susceptor according to the invention is in the form of a thin plate so as to be separated from the container containing the frozen rice. The susceptor may be included in the form to be coated on the inner surface of the container containing the frozen rice, this embodiment is not claimed.

The shape of the susceptor may be a circle, a polygon, or a fan shape, but is not limited thereto, and may be appropriately changed according to the shape of the container containing the frozen rice.

The susceptor is in contact with the frozen rice, and the contact area may be appropriately changed according to the shape of the frozen rice, the positions of the frozen rice and the susceptor, etc.

When the packaged frozen rice of the present application is heated in the microwave oven of 700 W for 6 minutes, the average temperature of the susceptor may be 85°C to 130°C. In addition, when the packaged frozen rice is heated in the microwave oven of 700 W for 6 minutes, the maximum temperature of the susceptor may be 100°C to 150°C. More specifically, when the packaged frozen rice is heated in the microwave oven of 700 W for 6 minutes, the average temperature of the susceptor may be 85°C to 130°C, and the maximum temperature of the susceptor may be 100°C to 150°C. Specifically, when the microwave oven is driven under the condition, the average temperature of the susceptor may be in a range consisting of a lower limit selected from 85°C, 90°C, 98°C and 95°C and/or an upper limit selected from 130°C and 125°C. For example, the average temperature may be a temperature of 85°C to 130°C, 85°C to 125°C, 90°C to 125°C, or 95°C to 125°C. In addition, when the microwave oven is driven under the condition, the maximum temperature of the susceptor may be in a range consisting of a lower limit selected from 100°C, 105°C, and 112°C and/or an upper limit selected from 150°C, 147°C, 145°C, 142°C, 140°C, 137°C, 135°C, 132°C, and 130°C. For example, the maximum temperature may be a temperature of 100°C to 150°C, 100°C to 147°C, 100°C to 145°C, 100°C to 142°C, 105°C to 145°C, 105°C to 142°C, 112°C to 135°C, or 112°C to 132°C. When the average temperature and/or maximum temperature of the susceptor are shown in the above range when the packaged frozen rice of the present application is heated in the microwave oven, the scorched texture of the frozen rice is effectively produced for a short time to induce a change in its color, but there is an effect that a problem of burning the frozen rice does not occur.

The frozen rice is frozen rice made by washing and boiling grains such as rice and barley as a raw material or frozen by mixing rice with auxiliary materials, and is a food that can be eaten immediately only by thawing. The rice as a raw material of the frozen rice is not limited to a type, such as white rice, black rice, brown rice, glutinous rice, and the like, and includes those cooked by mixing grains such as barley, beans, and millet in addition to rice. The frozen rice may be mixed with other food ingredients after being cooked, for example, bibimbap, rice served with toppings, etc., and may be fried rice fried in oil after being cooked. The fried rice may be, for example, chicken ribs fried rice, octopus fried rice, webfoot octopus fried rice, kimchi fried rice, shrimp fried rice, Spanish food paella, soccarat, etc., but is not limited thereto.

When the packaged frozen rice of the present application is heated in the microwave oven of 700 W for 6 minutes, as compared with when heating packaged frozen rice without a susceptor under the same condition, the frozen rice may have a color difference ΔE according to the CIE Lab of 3 or more. The CIE Lab is a color space coordinate, wherein L represents brightness, a represents the degree of bias between red and green, and b represents the degree of bias between yellow and blue, and based on **L, a,** and **b,** the color difference ΔE may represent a difference between the two colors. In the present application, the color difference ΔE according to the CIE Lab means a color difference when comparing a color after heating the microwaveable packaged frozen rice of the present application in the microwave oven with a color after heating the packaged frozen rice without the susceptor in the microwave oven under the same condition, and may be calculated by the following Equation based on **L, a,** and b values measured in each frozen rice.

[Equation]

$$\Delta E = \sqrt{(L_2 - L_1)^2 + (a_2 - a_1)^2 + (b_2 - b_1)^2}$$

The L, a, and b values may be measured by turning over the frozen rice immediately after heated in the microwave oven and measuring a color of the contact surface of the frozen rice with the susceptor using a color difference meter, and may be measured by vertically contacting the frozen rice with the color difference meter and evenly dividing the contact surface of the frozen rice into 9 equal parts.

In the present application, the color difference appears as the color changes as the frozen rice is scorched while heated in the microwave oven, and the larger the color difference appears, the more the frozen rice is scorched, which means that the texture of the frozen rice is better produced.

The color difference may be 3 to 30, and may be in a range consisting of a lower limit selected from 3.1, 3.2, 3.3, 3.4, and 3.5 and/or an upper limit selected from 30, 20, and 15. Specifically, the color difference may be 3.1 to 30 or less, 3.2 to 20 or less, or 3.3 to 14 or less. As the packaged frozen rice of the present application is heated by the microwave oven, the color difference in the above range may be shown compared to a heated material of the packaged frozen rice without a susceptor. When the color difference in the range is shown, the properly cooked texture of the grains of the cooked packaged frozen rice is increased to sufficiently produce a scorched texture, but the burnt taste occurring when overheated is not strong, and thus, the preference of consumers who eat the cooked packaged frozen rice is best.

The frozen rice has a volume ratio (volume/area) to a contact area with the susceptor of 16 to 45 mm. Specifically, the volume ratio (volume/area) to the contact area may be in a range consisting of a lower limit selected from 16, 18, 20, 22, 23, 23.5, 24, 24.5, and 25 mm and/or an upper limit selected from 45, 40, 35, 30, 28, 27, 26.5, 26, and 25.5 mm. For example, the volume ratio (volume/area) to the contact area may be 16 to 45 mm, 18 to 40 mm, 20 to 35 mm, 22 to 30 mm, 23 to 28 mm, 23.5 to 27 mm, 24 to 26.5 mm, 24.5 to 26 mm, 25 to 26 mm, 24.5 to 25.5 mm, or 25 to 25.5 mm. In the case of frozen rice in which the volume ratio (volume/area) to the contact area with the susceptor is shown as a numerical value within the above range, there is an advantage that the frozen rice may be cooked to show a color difference in which a scorched texture is best produced due to excellent heat transfer efficiency while having a thickness enough not to be burned by the heat received from the susceptor.

The frozen rice may include moisture and oil ingredients together with rice. In addition, the frozen rice may further include an emulsifier, such as lecithin, which acts to emulsify the moisture and oil. The oil may be edible oils used for food, for example, soybean oil, canola oil, sunflower oil, olive oil, corn oil, brown rice oil, etc., but is not limited thereto.

The frozen rice may have a moisture content of 40 wt% to 58 wt%. Specifically, the moisture content of the frozen rice may be in a range consisting of a lower limit selected from 40 wt%, 42 wt%, 44 wt%, 45 wt%, 47 wt%, 48 wt%, 48.5 wt%, 49 wt%, and 49.5 wt% and/or an upper limit selected from 58 wt%, 57 wt%, 56 wt%, 55 wt%, 54 wt%, and 53 wt%. For example, the moisture content of the frozen rice may be 40 wt% to 58 wt%, 42 wt% to 57 wt%, 44 wt% to 56 wt%, 45 wt% to 55 wt%, 47 wt% to 54 wt%, and 48 wt% to 53 wt%. When the moisture contained in the frozen rice is within the content range as described above, the maximum temperature and the average temperature of the susceptor increase as a dielectric constant decreases while a sufficient amount of moisture required for cooking is contained, and the cooked frozen rice is better scorched to have improved texture and flavor.

The frozen rice may have an oil content of 2 wt% to 10 wt%. Specifically, the oil content of the frozen rice may be in a range consisting of a lower limit selected from 2 wt%, 2.1 wt%, 2.2 wt%, 2.3 wt%, 2.4 wt%, 2.5 wt%, 2.55 wt%, 2.6 wt%, and 2.63 wt% and/or an upper limit selected from 10 wt%, 8 wt%, 7 wt%, 6 wt%, 5 wt%, 4 wt%, and 3 wt%. For example, the oil content of the frozen rice may be 2 to 10 wt%, 2.1 to 8 wt%, 2.2 to 7 wt%, 2.3 to 6 wt%, 2.4 to 5 wt%, or 2.5 to 4 wt%. When the oil contained in the frozen rice is in the content range as described above, when heating in the microwave oven, a high temperature of 100°C or higher of frozen rice is made in a short time to make a cooking environment similar to that of the pan cooking, and thus, there is an effect of improving the scorched texture of the packaged frozen rice.

The frozen rice may contain 0.5 parts by weight to 22 parts by weight of the oil based on 100 parts by weight of the moisture. Specifically, the content of the oil may be in a range consisting of a lower limit selected from 0.5 parts by weight, 1 part by weight, 2 parts by weight, 3 parts by weight, 4 parts by weight, 5 parts by weight, and 5.5 parts by weight and/or an upper limit selected from 22 parts by weight, 20 parts by weight, 18 parts by weight, 15 parts by weight, 13 parts by weight, 12 parts by weight, 10 parts by weight, 8 parts by weight, 7 parts by weight, and 6.5 parts by weight, based on 100 parts by weight of the moisture. For example, the content of the oil may be 0.5 to 22 parts by weight, 1 to 20 parts by weight, 2 to 18 parts by weight, 4.5 to 15 parts by weight, 5 to 13 parts by weight, or 5 to 12 parts by weight. When the contents of moisture and oil contained in the frozen rice are within the above ranges, the effect of decreasing the dielectric constant according to the moisture content and increasing the temperature according to the oil content is excellent, and thus, the temperature of the susceptor increases and the color difference before and after heating the frozen rice is large. As a result, there is an advantage in that it is possible to manufacture packaged frozen rice with a significantly improved scorched texture.

The frozen rice may be frozen by an individual quick frozen (IQF) or block quick freezing (BQF) method, and in the case of freezing in the IQF method, there is an advantage in that the production efficiency of the frozen rice is high, and in the case of freezing in the BQF method, there is an advantage in that the scorched texture is better produced when heating the packaged frozen rice in the microwave oven. Even if the packaged frozen rice according to the present application is frozen by the IQF method, the flavor may be maintained similarly to that of the case of freezing by the BQF method.

The frozen rice is in contact with the susceptor, and may be in contact with the susceptor on one or more surfaces of the frozen rice, for example, two or more surfaces, three or more surfaces, or four or more surfaces of the frozen rice depending on the shape of the frozen rice. The contact may be a direct contact between the frozen rice and the susceptor, or an indirect contact between the frozen rice and the susceptor with a packaging material commonly used as a food packaging material in the technical field of the present application. As described above, the packaging material that may be included between the frozen rice and the susceptor may be a material such as paper, film, and/or metal, and may be applied without limitation as long as the heat generated from the susceptor may be effectively transferred to the frozen rice. In addition, the susceptor and the frozen rice may be positioned in a form with a predetermined space between the frozen rice and the susceptor, and some of the frozen rice is in contact with the susceptor, and some of the frozen rice may be positioned to be spaced apart from the susceptor with a predetermined space.

The frozen rice may have any shape selected from the group consisting of a cylinder, a cone, a truncated cone, a polygonal prism, a polygonal pyramid, a truncated polygonal pyramid, a sphere, and a truncated sphere, but is not limited thereto. According to the shape of the frozen rice as described above, the shape of the susceptor may be appropriately changed and applied, and the contact method between the frozen rice and the susceptor may also be changed according to the shape of the frozen rice. For example, when the shape of the frozen rice is a cylinder, a cone, or a truncated cone, the shape of the susceptor may be a circle, and when the shape of the frozen rice is a polygonal prism, a polygonal pyramid, or a truncated polygonal pyramid, the shape of the susceptor may be a polygon, and in this case, the polygon of the susceptor may be formed of the same number of sides as at least one surface of the frozen rice. In addition, when the shape of the frozen rice is a sphere or a truncated sphere, the shape of the susceptor may be a shape surrounding the spherical surface of the frozen rice, for example, a circle or a fan shape. However, the shape of the susceptor may not necessarily be the same as the shape of the surface of the frozen rice in contact therewith.

The area of the susceptor may be larger or smaller than the surface of the frozen rice in contact with the susceptor, and may be the same as each other.

The microwavable packaged frozen rice of the present application may further include a container containing the frozen rice. The shape and material of the container may be any shape and material commonly used in the technical field of the present application. In particular, the shape of the container may be appropriately changed according to a shape of the frozen rice, and specifically, the shape of the container may be the same as the shape of the frozen rice.

The microwavable packaged frozen rice of the present application may further include a seasoning sauce. The seasoning sauce may be a curry sauce, a jjajang sauce, a gochujang sauce, a bibimbap sauce, a soy sauce, a seafood rice bowl sauce, a beef bulgogi rice bowl sauce, a pork bulgogi rice bowl sauce, a beef rib stew bowl sauce, a pork ribs steamed rice bowl sauce, a beef rib roast bowl sauce, a pork ribs roast bowl sauce, and the like, but is not limited thereto. According to a type of seasoning sauce, the frozen rice may be bibimbap, rice bowls with toppings, or fried rice. The seasoning sauce may be included in a form added to the frozen rice, and may be included in a form packaged by a separate container from the frozen rice and a packaging material.

Another aspect of the present application provides a manufacturing method for microwavable packaged frozen rice including preparing frozen rice; and contacting the frozen rice and a susceptor.

The description of the 'microwaveable packaged frozen rice' is the same as described above, and specifically, the types, shapes, ingredients, contents, heating temperatures, color differences after heating, freezing methods, contact methods, and the like of the packaged frozen rice, the susceptor and/or the frozen rice may be equally applied to the manufacturing method for packaged frozen rice of the present application.

The manufacturing method for the packaged frozen rice of the present application may further include packaging a seasoning sauce. The description of the seasoning sauce is the same as described above.

The packaged frozen rice manufactured according to the manufacturing method for the packaged frozen rice of the present application has an effect of improving a scorched texture when heated in a microwave oven. Specifically, the improving of the scorched texture means a more improved scorched texture than that of when cooking general packaged frozen rice in a microwave oven, and may have a similar or more improved scorched texture to or than rice cooked using a pan. The description of the scorched texture is the same as that described in the microwaveable packaged frozen rice.

Hereinafter, the present application will be described in detail by Experimental Examples.

However, the following Experimental Examples specifically illustrate the present application, and the content of the present application is not limited by the following Examples.

**[Experimental Example 1]**

**Confirmation of temperature and produced scorched texture when heating frozen fried rice with susceptor in microwave oven**

By bringing the susceptor into contact with frozen rice, it was confirmed whether the scorched texture and flavor of rice, which have been produced only in a pan cooking process, may be produced even in a microwave cooking process of packaged frozen rice.

For the frozen rice, commercially sold chicken ribs fried rice (CJ Cheiljedang) was used, and 200 g of frozen rice was put in a container and heated in a microwave oven of 700 W for 6 minutes. In order to confirm an effect difference according to the presence or absence of a susceptor, heating was performed in a general container without a susceptor and a container with a susceptor positioned on the bottom, respectively. The temperature change of the susceptor was measured in the heating process, and a product temperature of the rice was measured after the cooking was completed.

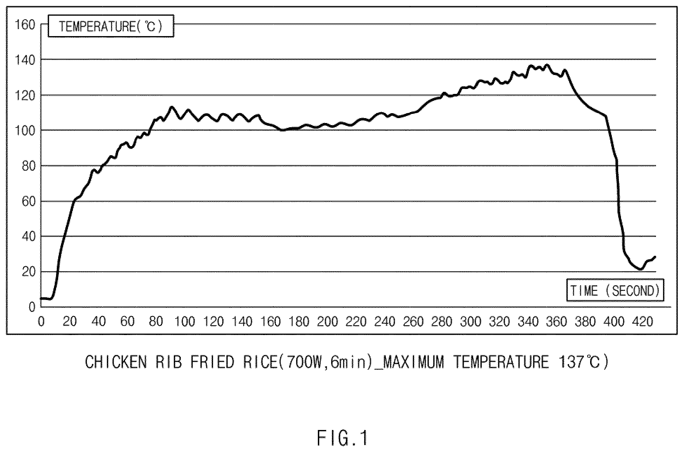

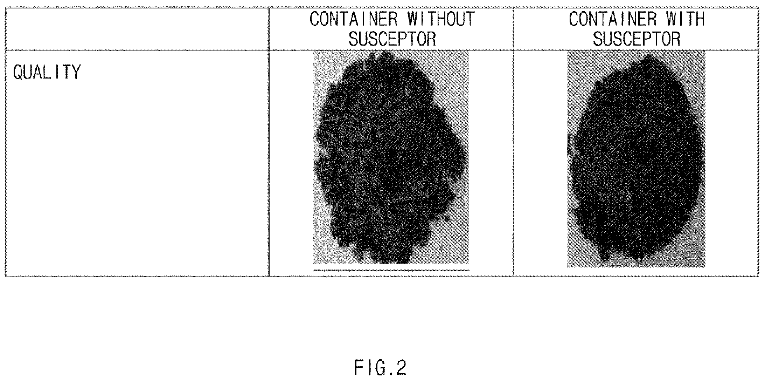

As a result, it was confirmed that the maximum temperature of the susceptor was 137°C, which may form a high temperature of 100°C or higher at a fast rate (FIG. 1). It was confirmed that when heating in a microwave oven using a susceptor, the temperature of the rice was higher, and when the color of the rice heated with the susceptor was visually confirmed, a darker color was shown, and a scorched texture when eaten was produced (FIG. 2).

As the results, when the susceptor was applied in the field of packaged frozen rice, a high temperature may be formed for a short time when heating in the microwave oven, and in particular, even when cooking in the microwave oven the scorched texture of rice that has been produced only during the pan cooking, it was newly confirmed that the scorched texture may be produced by using the susceptor.

**[Experimental Example 2]**

**Confirmation of susceptor temperature and produced scorched texture of rice according to volume ratio (volume/area) of frozen rice to contact area with susceptor**

In order to further improve a microwave heating effect of packaged frozen rice with a susceptor, compared to the area of the frozen rice in contact with the susceptor, a condition for producing a best scorched texture of rice was confirmed by varying the thickness (height) of the frozen rice.

Specifically, first, susceptors having diameters of 215 mm, 150 mm, and 94 mm were manufactured based on a circular container, respectively, and a container in which the susceptor was located on the bottom was manufactured. Then, 200 g of frozen rice was put in each container having a different bottom diameter as described above and heated in a microwave oven of 700 W for 6 minutes, and the maximum/average temperature of the susceptor was measured (Table 2). In addition, in order to confirm a color change before and after heating of the frozen rice, L, a, and b values of the frozen rice were measured using a color difference meter (manufacturer: TES, model name: TES-135A) to calculate a color difference ΔE according to the CIE Lab according to the following Equation (Table 1). Specifically, the color of the contact surface between the susceptor and the frozen rice was measured by turning over the frozen rice immediately after heating in the microwave oven, and measured by vertically contacting the frozen rice and the color difference meter and dividing the contact surface of the frozen rice into 9 equal parts.

[Equation]

$$\Delta E = \sqrt{(L_2 - L_1)^2 + (a_2 - a_1)^2 + (b_2 - b_1)^2}$$

When the average temperature and the maximum temperature of the susceptor were higher or the color difference was large, it was meant that a scorched texture was better produced in the cooking process of the frozen rice using the microwave oven.

[Table 1]

| | Comparative Example 1 | Example 1 | Comparative Example 2 | Example 2 | Comparative Example 3 | Example 3 |
|---|---|---|---|---|---|---|
| Presence or absence of susceptor | X | O | X | O | X | O |
| Weight (g) of frozen rice | 200 | 200 | 200 | 200 | 200 | 200 |
| Susceptor diameter (mm) | 215 | 215 | 150 | 150 | 94 | 94 |
| Height of frozen rice before heating (mm) | 15 | 15 | 25 | 25 | 55 | 55 |
| Volume ratio to contact area (mm) (volume/area) | 15 | 15 | 25 | 25 | 55 | 55 |
| Susceptor maximum temperature (°C) | - | 119.00 | 100.00 | 125.00 | 89.00 | 121.00 |
| Susceptor average temperature (°C) | - | 79.00 | 86.00 | 96.00 | 80.00 | 85.00 |
| Color difference (ΔE) | The rice of Example 1 was burned and measurement was impossible | | 13.44 | | 5.10 | |

As a result, if the thickness of the frozen rice was too thin and the volume/area ratio was too small, the rice burned when using the susceptor, could not be cooked. Therefore, through the results as described above, it was confirmed that when the volume/area ratio was maintained at an appropriate ratio without being too small, the heating efficiency by the susceptor was increased to further improve the scorched texture in the packaged frozen rice.

**[Experimental Example 3]**

**Confirmation of susceptor temperature and produced scorched texture of rice according to moisture content of frozen rice**

In addition to confirm the efficiency of the susceptor according to the shape of the frozen rice in Experimental Example 2, the temperature of the susceptor and the scorched texture of the rice according to the microwave heating were confirmed by changing the content of the moisture ingredient included in the frozen rice.

[Table 2]

| Ingredient | Example 4 | | Example 5 | | Example 6 | |
|---|---|---|---|---|---|---|
| | Wt (g) | Wt% | Wt (g) | Wt% | Wt (g) | Wt% |
| Rice | 100 | 48.45% | 100 | 44.17% | 100 | 40.37% |
| Purified moisture | 100 | 48.45% | 120 | 53.00% | 140 | 56.52% |
| Soybean oil | 5 | 2.42% | 5 | 2.21% | 5 | 2.03% |

(continued)

| Ingredient | Example 4 | | Example 5 | | Example 6 | |
|---|---|---|---|---|---|---|
| | Wt (g) | Wt% | Wt (g) | Wt% | Wt (g) | Wt% |
| Lecithin | 1.4 | 0.68% | 1.4 | 0.62% | 1.4 | 0.57% |
| Total | 206.4 | 100% | 226.4 | 100% | 246.4 | 100% |

Frozen rice of Examples 4 to 6 was manufactured at ingredient ratios according to Table 2, and 200 g of the frozen rice was put in a container with a circular susceptor having a diameter of 14.7 cm and heated in a microwave oven of 700 W for 6 minutes, and during the heating process, the maximum and average temperatures of the susceptors were measured. In addition, the colors after heating the frozen rice of Examples 4 to 6 were measured and then compared with the color after heating frozen rice in a microwave oven without a susceptor (Comparative Example 4), and a color difference ΔE was calculated and compared in the same manner as in Experimental Example 2 (Table 3).

[Table 3]

| | Comparative Example 4 | Example 4 (moisture 48%) | Example 5 (moisture 52%) | Example (moisture 56%) |
|---|---|---|---|---|
| Presence or absence of susceptor | X | O | O | O |
| Susceptor maximum temperature (°C) | | 127.00 | 114.00 | 109.00 |
| Susceptor average temperature (°C) | | 105.00 | 99.00 | 92.00 |
| Color difference compared to Comparative Example 4 (ΔE) | - | 3.66 | 3.22 | 3.16 |

As a result, compared to Comparative Example 4 heated without the susceptor, the packaged frozen rice of Examples 4 to 6 heated in the microwave with the susceptor had higher maximum temperature and average temperature of the susceptor. Among them, the maximum/average temperature of the susceptor was measured to be higher in packaged frozen rice with a lower moisture content in the frozen rice. In addition, even in the comparison result in color difference with Comparative Example 4 without using the susceptor, it was confirmed that more scorched portions after heating were formed in packaged frozen rice having a low moisture content. As the results, in the microwave cooking process of the packaged frozen rice, it was confirmed that as the amount of moisture contained in the frozen rice was further reduced, the efficiency of the susceptor was improved to increase the scorched portion of the rice. Accordingly, it was confirmed that rice in which the scorched texture was more produced was manufactured by setting a low moisture content enough to increase the efficiency of the susceptor while having a high moisture content in which the rice was not burned but normally thawed during microwave cooking.

[Experimental Example 4]

**Confirmation of susceptor temperature and produced scorched texture of rice according to oil content of frozen rice**

In addition to confirm the efficiency of the susceptor according to the shape of the frozen rice in Experimental Example 2, the temperature of the susceptor and the scorched texture of the rice according to the microwave heating were confirmed by changing the content of the oil ingredient included in the frozen rice.

[Table 4]

| Ingredient | Example 7 | | Example 8 | | Example 9 | |
|---|---|---|---|---|---|---|
| | Wt (g) | Wt% | Wt (g) | Wt% | Wt (g) | Wt% |
| Rice | 1000 | 48.37% | 1000 | 47.23% | 1000 | 45.93% |

(continued)

| Ingredient | Example 7 | | Example 8 | | Example 9 | |
|---|---|---|---|---|---|---|
| | Wt (g) | Wt% | Wt (g) | Wt% | Wt (g) | Wt% |
| Purified moisture | 1060 | 51.27% | 1060 | 50.06% | 1060 | 48.68% |
| Soybean oil | 6 | 0.29% | 56 | 2. 64% | 116 | 5.33% |
| Lecithin | 1.4 | 0.07% | 1.4 | 0.07% | 1.4 | 0.06% |
| Total | 2067.4 | 100% | 2117.4 | 100% | 2117.4 | 100% |

Frozen rice of Examples 7 to 9 was manufactured at ingredient ratios according to Table 4, and 200 g of the frozen rice was put in a container with a circular susceptor having a diameter of 14.7 cm and heated in a microwave oven of 700 W for 6 minutes, and during the heating process, the maximum and average temperatures of the susceptors were measured. In addition, the colors after heating the frozen rice of Examples 7 to 9 were measured and then compared with the color after heating frozen rice prepared according to an ingredient ratio of Example 8 in a microwave oven without a susceptor (Comparative Example 5) and a color difference ∆E was calculated and compared in the same manner as in Experimental Example 2 (Table 5).

[Table 5]

| | Comparative Example 5 | Example 7 (oil 0.29%) | Example 8 (oil 2. 64%) | Example 9 (moisture 5.33%) |
|---|---|---|---|---|
| Presence or absence of susceptor | X | O | O | O |
| Susceptor maximum temperature (°C) | | 109.00 | 130.00 | 130.00 |
| Susceptor average temperature (°C) | | 92.00 | 124.00 | 123.00 |
| Color difference compared to Comparative Example 5 (∆E) | - | 3.57 | 4.36 | 3.97 |

As a result, compared to Comparative Example 5 heated without a susceptor, the packaged frozen rice of Examples 7 to 9 heated in a microwave oven with a susceptor had high maximum temperature and average temperature of the susceptor. In addition, the maximum/average temperature of the susceptor was measured to be higher in packaged frozen rice with an oil content of 2.64% than that of frozen rice with the oil content of 0.29% included in the frozen rice, but the maximum/average temperature was maintained similarly even in frozen rice having the oil content or higher. In addition, as a result of comparing a color difference with Comparative Example 5 without using the susceptor, it was confirmed that a scorched portion was formed when the oil content was increased. As the results, in the microwave cooking process of the packaged frozen rice, it was confirmed that when the amount of oil contained in the frozen rice was included in a certain amount or more, the temperature of the susceptor increased, and as the oil content was set within a certain range, the efficiency of the susceptor was improved the most and thus the scorched portion of the rice could be increased.

Hereinabove, representative Experimental Examples of the present application have been exemplarily described, but the scope of the present application is not limited to the specific Experimental Examples as described above, and can be changed appropriately by those of ordinary skill in the art within the scope described in the appended claims of the present application.

**Claims**

1. Microwavable packaged frozen rice comprising a susceptor and frozen rice,

   wherein the susceptor has a form of a thin plate from a food packaging material, which is thinly coated with a metal, and
   wherein the frozen rice has a volume ratio (volume/area) to a contact area with the susceptor of 16 mm to 45 mm.

2. The microwavable packaged frozen rice of claim 1, wherein the susceptor has an average temperature of 85°C to 130°C, or a maximum temperature of 100°C to 150°C when the packaged frozen rice is heated in a microwave oven.

3. The microwavable packaged frozen rice of claim 1, wherein the frozen rice has a color difference (ΔE) according to the CIE Lab of 3 or higher when heating the packaged frozen rice in the microwave oven, as compared with when heating packaged frozen rice without a susceptor under the same condition.

4. The microwavable packaged frozen rice of claim 1, wherein the frozen rice has a moisture content of 40 wt% to 58 wt%.

5. The microwavable packaged frozen rice of claim 1, wherein the frozen rice has an oil content of 2 wt% to 10 wt%.

6. The microwavable packaged frozen rice of claim 1, wherein the frozen rice contains the oil in a content of 0.5 part by weight to 22 parts by weight based on 100 parts by weight of the moisture.

7. The microwavable packaged frozen rice of claim 1, wherein the frozen rice has any one shape selected from the group consisting of a cylinder, a cone, a truncated cone, a polygonal prism, a polygonal pyramid, a truncated polygonal pyramid, a sphere, and a truncated sphere.

8. A manufacturing method for microwavable packaged frozen rice comprising:

preparing frozen rice; and
contacting the frozen rice and a susceptor so that the frozen rice has a volume ratio (volume/area) to contact area with the susceptor of 16 mm to 45 mm;
wherein the susceptor has a form of a thin plate from a food packaging material, which is thinly coated with a metal.


**Patentansprüche**

1. Mikrowellentauglich Verpackter tiefgefrorener Reis, umfassend einem Suszeptor und tiefgefrorenem Reis,

- **dadurch gekennzeichnet, dass** der Suszeptor die Form einer dünnen Platte aus einem Lebensmittelverpackungsmaterial hat, die dünn mit einem Metall beschichtet ist, und
- **dadurch gekennzeichnet, dass** der tiefgefrorene Reis ein Volumenverhältnis (Volumen/Fläche) zu einer Kontaktfläche mit dem Suszeptor von 16 mm bis 45 mm hat.

2. Mikrowellentauglich Verpackter tiefgefrorener Reis nach Anspruch 1, **dadurch gekennzeichnet, dass** der Suszeptor eine durchschnittliche Temperatur von 85°C bis 130°C oder eine maximale Temperatur von 100°C bis 150°C hat, wenn der tiefgefrorene verpackte Reis in einer Mikrowelle erhitzt wird.

3. Mikrowellentauglich Verpackter tiefgefrorener Reis nach Anspruch 1, **dadurch gekennzeichnet, dass** der tiefgefrorener Reis einen Farbunterschied (ΔE) gemäß dem CIE Lab von 3 oder höher aufweist, wenn der verpackte tiefgefrorene Reis in der Mikrowelle erhitzt wird, verglichen mit dem Erhitzen von verpacktem tiefgefrorenem Reis ohne Suszeptor unter den gleichen Bedingungen.

4. Mikrowellentauglich Verpackter tiefgefrorener Reis nach Anspruch 1, **dadurch gekennzeichnet, dass** der tiefgefrorene Reis einen Feuchtigkeitsgehalt von 40 Gew.-% bis 58 Gew.-% hat.

5. Mikrowellentauglich Verpackter tiefgefrorener Reis nach Anspruch 1, **dadurch gekennzeichnet, dass** der tiefgefrorene Reis einen Ölgehalt von 2 Gew.-% bis 10 Gew.-% hat.

6. Mikrowellentauglich Verpackter tiefgefrorener Reis nach Anspruch 1, **dadurch gekennzeichnet, dass** der tiefgefrorene Reis das Öl in einem Gehalt von 0,5 Gew.-Teilen bis 22 Gew.-Teilen bezogen auf 100 Gew.-Teile der Feuchtigkeit enthält.

7. Mikrowellentauglich Verpackter tiefgefrorener Reis nach Anspruch 1, **dadurch gekennzeichnet, dass** der tiefgefrorene Reis eine Form hat, die aus der Gruppe bestehend aus einem Zylinder, einem Kegel, einem abgeschnittenen Kegel, einem polygonalen Prisma, einer polygonalen Pyramide, einer abgeschnittenen polygonalen Pyramide, einer Kugel und einer abgeschnittenen Kugel ausgewählt ist.

8. Verfahren zur Herstellung von Mikrowellentauglich Verpacktem tiefgefrorenem Reis, umfassend die folgenden Schritte:

- Zubereiten des tiefgefrorenen Reises; und
- In-Kontakt-Bringen des gefrorenen Reises und eines Suszeptors, so dass der tiefgefrorene Reis ein Volumenverhältnis (Volumen/Oberfläche) zur Kontaktfläche mit dem Suszeptor von 16 mm bis 45 mm aufweist ;
- **dadurch gekennzeichnet, dass** der Suszeptor die Form einer dünnen Platte aus einem Lebensmittelverpackungsmaterial hat, die dünn mit einem Metall beschichtet ist.

**Revendications**

1. Riz surgelé conditionné pour cuisson au micro-ondes comprenant un suscepteur et du riz surgelé,

   - **caractérisé en ce que** le suscepteur a la forme d'une plaque mince provenant d'un matériau d'emballage alimentaire, qui est finement revêtue de métal, et
   - **caractérisé en ce que** le riz surgelé a un rapport de volume (volume/surface) à une surface de contact avec le suscepteur de 16 mm à 45 mm.

2. Riz surgelé conditionné pour cuisson au micro-ondes selon la revendication 1, **caractérisé en ce que** le suscepteur a une température moyenne de 85°C à 130°C, ou une température maximale de 100°C à 150°C lorsque le riz surgelé conditionné est chauffé dans un four à micro-ondes.

3. Riz surgelé conditionné pour cuisson au micro-ondes selon la revendication 1, **caractérisé en ce que** le riz surgelé a une différence de couleur ($\Delta$E) selon le CIE Lab de 3 ou plus, lors du chauffage du riz surgelé conditionné dans le four à micro-ondes, par rapport au chauffage du riz surgelé conditionné sans suscepteur dans les mêmes conditions.

4. Riz surgelé conditionné pour cuisson au micro-ondes selon la revendication 1, **caractérisé en ce que** le riz surgelé a une teneur en humidité de 40% en masse à 58% en masse.

5. Riz surgelé conditionné pour cuisson au micro-ondes selon la revendication 1, **caractérisé en ce que** le riz surgelé a une teneur en huile de 2% en masse à 10% en masse.

6. Riz surgelé conditionné pour cuisson au micro-ondes selon la revendication 1, **caractérisé en ce que** le riz surgelé contient de l'huile à teneur de 0,5 partie en masse à 22 parties en masse sur la base de 100 parties en masse de l'humidité.

7. Riz surgelé conditionné pour cuisson au micro-ondes selon la revendication 1, **caractérisé en ce que** le riz surgelé a une forme sélectionnée parmi le groupe constitué d'un cylindre, d'un cône, d'un cône tronqué, d'un prisme polygonal, d'une pyramide polygonale, d'une pyramide polygonale tronquée, d'une sphère et d'une sphère tronquée.

8. Procédé de fabrication de riz surgelé conditionné pour cuisson au micro-ondes comprenant les étapes suivantes :

   - préparer le riz surgelé ; et
   - mettre en contact le riz surgelé et un suscepteur de sorte que le riz surgelé ait un rapport de volume (volume/surface) à la surface de contact avec le suscepteur de 16 mm à 45 mm ;
   - **caractérisé en ce que** le suscepteur a la forme d'une plaque mince provenant d'un matériau d'emballage alimentaire, qui est finement revêtue d'un métal.

CHICKEN RIB FRIED RICE(700W,6min)_MAXIMUM TEMPERATURE 137℃)

FIG.1

| | CONTAINER WITHOUT SUSCEPTOR | CONTAINER WITH SUSCEPTOR |
|---|---|---|
| QUALITY | | |

FIG.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017092913 A
- KR 1020090096453